# EUROPEAN PATENT APPLICATION

(11) **EP 3 650 487 A1**
(43) Date of publication of application: **13.05.2020**
(21) Application number: 18204721.7
(22) Date of filing: 06.11.2018
(51) Int. Cl.: C08J 5/04, C08J 7/04, B29C 45/00, B29C 45/14

(54) **THERMOPLASTIC COMPOSITE ARTICLE AND PREPARATION METHOD THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a thermoplastic composite article and a method of making the same. The method of preparing a thermoplastic composite article provided by the present invention comprises the steps of: a) coating a coating composition on one surface of a thermoplastic composite substrate; and b) allowing the substrate coated with the coating composition to be thermoformed in a forming mold to obtain the thermoplastic composite article. Compared with the prior art, the method of preparing a thermoplastic composite article provided by the present invention reduces the production steps such as overmolding and multiple spraying, decreases the warpage risk of the thermoplastic composite article, and simplifies the production process, thereby effectively improving the production efficiency and yield rate, in addition, it is also environmentally friendly.

## Description

### Technical field

The invention pertains to the field of thermoplastic composite materials, and in particular relates to a thermoplastic composite article and its preparation method and use.

### Background

The fiber reinforced thermoplastic composite industry has developed rapidly. Carbon fiber reinforced composites, such as carbon fiber reinforced polycarbonate composites, are valued for their properties such as high stiffness, low specific gravity, ease of forming and the like. More and more products or components are made of carbon fiber reinforced composites, such as the shell body of electronic products. Continuous carbon fiber reinforced thermoplastic composites (Continuous Fiber Reinforced Thermoplastic, abbreviated as CFRTP sheets) are often used in special applications such as aerospace due to their unique mechanical properties. In recent years, the application of CFRTP sheets in consumer electronics, transportation tools, sporting goods, and other industrial markets has grown significantly.

The requirements for carbon fiber reinforced composites are no longer limited to mechanical properties, but also include the aesthetic appearance of their products. There are many ways to decorate the surface of carbon fiber reinforced thermoplastic composites. A commonly used method in the industry is the use of paints on the surface of thermoformed thermoplastic composite product parts for surface coating.

The parts prepared by thermoforming of the CFRTP sheets are usually three-dimensional articles. In most cases, spray coating process is commonly used to decorate an article that has a three-dimensional structure such as a bumpy design or a sharp edge. If the surface of the three-dimensional article is irregular, it will require multiple spraying processes, and it usually takes a large amount of paint to obtain a uniform coating, resulting in serious paint waste. In the spraying process, the three-dimensional article usually needs a specially designed device to be fixed, so as to ensure that the surface and sides of the article can be uniformly sprayed. If the paint used is a heat-curable coating system, the coating on the surface of the three-dimensional article also requires an additional curing/drying step. If the surface of the article requires an additional decorative pattern, more steps are needed, such as the step of transferring the pattern to the surface of a thermoformed CFRTP sheet article.

TW 201700252 A discloses a method for producing a plastic molded article and a mold for such a plastic molded article. The method disclosed therein comprises the following steps: a) providing at least one base which is made of a fiber composite plastic material; b) providing at least one decorative film; c) heating the at least one base; and d) joining the base and the decorative film in a mold, wherein the decorative film comprises different layers such as a protective layer, a decorative layer, an adhesive layer and the like. In the compression thermoforming process, the decorative layer is transferred from the decorative film to the surface of the plastic molded article and then the protective layer is peeled off. The protective layer is usually a pure plastic film, and its shrinkage rate is usually much higher than that of the base made of a fiber reinforced thermoplastic composite material, probably resulting in deformation of the plastic molded article, that is, deformation to the side of the protective layer.

In the prior art, the preparation of a thermoplastic composite article having a good surface suffers the disadvantages of complicated process, high cost, serious waste, and high defective product rate. Therefore, there is a need in the industry to provide a method for preparing a thermoplastic composite article, its product and application with a good surface.

### Summary of the Invention

It is an object of the present invention to provide a method of preparing a thermoplastic composite article. The method comprises the steps of: a) coating a coating composition on one surface of a thermoplastic composite substrate; and b) allowing the substrate coated with the coating composition to be thermoformed in a forming mold to obtain the thermoplastic composite article.

It is another object of the present invention to provide a thermoplastic composite article prepared by the method for preparing the thermoplastic composite article provided by the present invention.

It is yet another object of the present invention to use the thermoplastic composite article provided according to the present invention in electronic products, box bodies, vehicles, conveyances, and the like.

It is still another object of the present invention to provide an electronic product. The electronic product comprises a thermoplastic composite article provided according to the present invention, such as a shell body. The electronic product may be one or more of a mobile communication device, a notebook computer, a tablet computer, and the like.

The thermoplastic composite substrate may include a substrate cut from a thermoplastic composite sheet. The thermoplastic composite sheet may include a fiber reinforced polycarbonate composite sheet. The fiber reinforced polycarbonate composite sheet may include a continuous carbon fiber reinforced polycarbonate composite sheet, and also a short fiber reinforced polycarbonate composite sheet. The continuous carbon fiber may be one or more of carbon fiber woven cloth, nonwoven cloth, or unidirectional fiber.

The coating composition may be one or more of an aqueous UV-curable polyurethane coating composition, a two-component aqueous polyurethane coating composition, and a one-component aqueous polyurethane coating composition for high-temperature baking varnish.

The coating can be carried out by means of the coating methods commonly used in the industry, such as roll coating, dip coating, spray coating, brush coating, and the like.

The method of preparing a thermoplastic composite article provided according the present invention as well as its product and application can reduce paint waste, simplify process, improve efficiency, and enrich surface decoration.

### Detailed Description

The invention will now be described by way of illustration and not limitation. Except for those in the specific examples or where otherwise indicated, all numbers expressing quantities, percentages, and so forth in the specification are to be understood as being modified in all instances by the term "about".

The present invention provides a method of preparing a thermoplastic composite article. The method of preparing a thermoplastic composite article comprises the steps of: a) coating a coating composition on one surface of a thermoplastic composite substrate; and b) allowing the substrate coated with the coating composition to be thermoformedin a forming mold to obtain the thermoplastic composite article.

### Thermoplastic composite substrate

The thermoplastic composite substrate of the present invention generally includes a thermoplastic material as a matrix and a reinforcing material.

The present invention has no special requirements on the thermoplastic material as a matrix in the thermoplastic composite substrate, as long as it meets the requirements of the industry and specific products in terms of rigidity, toughness, environmental protection, flame retardance, bonding strength to reinforcing materials, and the like.

The thermoplastic material as a matrix in the thermoplastic composite may be selected from the group consisting of polyolefins, vinyl polymers, polyacrylates, polyamides, polyurethanes, polyureas, polyimides, polyesters, polyethers, polystyrenes, polyhydantoin, polyphenylene oxide (PPO), polyarylene sulfides, polysulfones, polycarbonates (PC), polymethyl methacrylate (PMMA), acrylonitrile-styrene copolymers (SAN), thermoplastic polyolefin elastomers (TPO), thermoplastic polyurethanes (TPU), polyoxymethylene (POM).

The vinyl polymers are preferably selected from the group consisting of polyvinyl halides, polyvinyl alcohols and polyvinyl ethers.

The polyamides are preferably selected from the group consisting of polyamide 66 (PA66), polyamide 6 (PA6) and polyamide 12 (PA12).

Particularly preferably, at least one thermoplastic material is selected from the group consisting of polyamide 66 (PA66), polyamide 6 (PA6), polyamide 12 (PA12), phenylpropanolamine (PPA), polypropylene (PP), polyphenylene sulfide (PPS), polycarbonates (PC), thermoplastic polyurethanes (TPU).

Very particularly preferably, at least one thermoplastic material is selected from the group consisting of thermoplastic polyurethanes (TPU), polyamide 6 (PA6) and polycarbonates (PC).

Suitable polycarbonates includes aromatic polycarbonates and/or aromatic polyester carbonates prepared according to the literature known, or can be prepared by processes known in the literature (for the preparation of aromatic polycarbonates see, for example, Schnell, "Chemistry and Physics of Polycarbonates", Interscience Publishers, 1964 and DE-AS 1 495 626, DE-A 2 232 877, DE-A 2 703 376, DE-A 2 714 544, DE-A 3 000 610, and DE-A 3 832 396; for the preparation of aromatic polyester carbonates see e.g. DE-A 3 007 934).

The preparation of aromatic polycarbonates is carried out, for example, by reaction of diphenols with carbonic acid halides, preferably phosgene, and/or with aromatic dicarboxylic acid dihalides, preferably benzenedicarboxylic acid dihalides, according to the interfacial process, optionally using chain terminators, for example monophenols, and optionally using branching agents having a functionality of three or more than three, for example triphenols or tetraphenols. Preparation by a melt polymerisation process by reaction of diphenols with, for example, diphenyl carbonate is also possible.

Diphenols for the preparation of the aromatic polycarbonates and/or aromatic polyester carbonates are preferably those of formula (1) 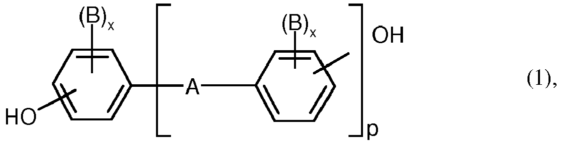 wherein
A is a single bond, C₁- to C₅-alkylene, C₂- to C₅-alkylidene, C₅- to C₆-cycloalkylidene, -O-, -SO-, -CO-, -S-, -SO₂-, C₆- to C₁₂-arylene, to which further aromatic rings optionally containing heteroatoms can be fused,
   or a radical of formula (2) or (3) 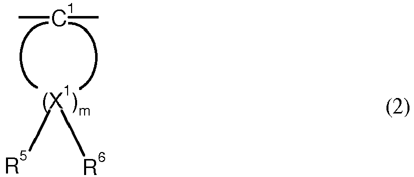 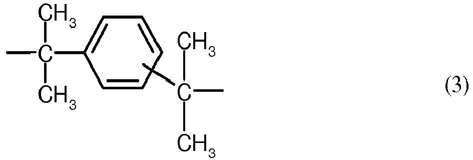
B is in each case C₁- to C₁₂-alkyl, preferably methyl, halogen, preferably chlorine and/or bromine,
x each independently of the other is 0, 1 or 2,
p is 1 or 0, and
R⁵ and R⁶ can be chosen individually for each X¹ and each independently of the other is hydrogen or C₁- to C₆-alkyl, preferably hydrogen, methyl or ethyl,
X¹ is carbon and
m is an integer from 4 to 7, preferably 4 or 5, with the proviso that on at least one atom X¹, R⁵ and R⁶ are simultaneously alkyl.

Preferred diphenols are hydroquinone, resorcinol, dihydroxydiphenols, bis-(hydroxyphenyl)-C₁-C₅-alkanes, bis-(hydroxyphenyl)-C₅-C₆-cycloalkanes, bis-(hydroxyphenyl) ethers, bis-(hydroxyphenyl) sulfoxides, bis-(hydroxyphenyl) ketones, bis-(hydroxyphenyl)-sulfones and α,α-bis-(hydroxyphenyl)-diisopropyl-benzenes, and derivatives thereof brominated and/or chlorinated on the ring. Particularly preferred diphenols are 4,4'-dihydroxydiphenyl, bisphenol A, 2,4-bis(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenylsulfone and di- and tetra-brominated or chlorinated derivatives thereof, such as, for example, 2,2-bis(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane. 2,2-Bis-(4-hydroxyphenyl)-propane (bisphenol B) is particularly preferred.

The diphenols can be used on their own or in the form of arbitrary mixtures. The diphenols are known in the literature or are obtainable according to processes known in the literature.

Chain terminators suitable for the preparation of thermoplastic aromatic polycarbonates are, for example, phenol, p-chlorophenol, p-tert-butylphenol or 2,4,6-tribromophenol, but also long-chained alkylphenols, such as 4-[2-(2,4,4-trimethylpentyl)]-phenol, 4-(1,3-tetramethylbutyl)-phenol according to DE-A 2 842 005 or monoalkylphenol or dialkylphenols having a total of from 8 to 20 carbon atoms in the alkyl substituents, such as 3,5-di-tert-butylphenol, p-isooctylphenol, p-tert-octylphenol, p-dodecylphenol and 2-(3,5-dimethylheptyl)-phenol and 4-(3,5-dimethylheptyl)-phenol. The amount of chain terminators to be used is generally from 0.5 mol% to 10 mol%, based on the molar sum of the diphenols used in a particular case.

The thermoplastic aromatic polycarbonates have mean molecular weights (weight-average M, measured by GPC (gel permeation chromatography) with polycarbonate standard) of from 15,000 to 80,000 g/mol, preferably from 19,000 to 32,000 g/mol, particularly preferably from 22,000 to 30,000 g/mol.

The thermoplastic aromatic polycarbonates can be branched in a known manner, and more specifically, preferably by the incorporation of from 0.05 to 2.0 mol%, based on the molar sum of the diphenols used, of compounds having a functionality of three or more than three, for example those having three or more phenolic groups. Preference is given to the use of linear polycarbonates, more preferably based on bisphenol A.

Both homopolycarbonates and copolycarbonates are suitable. For the preparation of copolycarbonates, it is possible to use from 1 to 25 wt.%, preferably from 2.5 to 25 wt.%, based on the total amount of diphenols to be used, of polydiorganosiloxanes having hydroxyaryloxy end groups. These are known (for example, described in US 3 419 634) and can be prepared according to processes known in the literature. Also suitable are copolycarbonates containing polydiorganosiloxanes; the preparation of copolycarbonates containing polydiorganosiloxanes is described, for example, in DE-A 3 334 782.

Aromatic dicarboxylic acid dihalides for the preparation of aromatic polyester carbonates are preferably the diacid dichlorides of isophthalic acid, terephthalic acid, diphenyl ether 4,4'-dicarboxylic acid and naphthalene-2,6-dicarboxylic acid.

Mixtures of the diacid dichlorides of isophthalic acid and terephthalic acid in a ratio of from 1:20 to 20:1 are particularly preferred. In the preparation of polyester carbonates, a carbonic acid halide, preferably phosgene, is additionally used concomitantly as bifunctional acid derivative.

Suitable chain terminators for the preparation of the aromatic polyester carbonates, in addition to the monophenols already mentioned, are also the chlorocarbonic acid esters and the acid chlorides of aromatic monocarboxylic acids, which can optionally be substituted by C₁- to C₂₂-alkyl groups or by halogen atoms, as well as aliphatic C₂- to C₂₂-monocarboxylic acid chlorides.

The amount of chain terminators is in each case from 0.1 to 10 mol%, based in the case of phenolic chain terminators on mol of diphenol and in the case of monocarboxylic acid chloride chain terminators on mol of dicarboxylic acid dichloride.

One or more aromatic hydroxycarboxylic acids can additionally be used in the preparation of aromatic polyester carbonates.

The aromatic polyester carbonates can be both linear and branched in known manner (see in this connection DE-A 2 940 024 and DE-A 3 007 934), linear polyester carbonates being preferred.

There can be used as branching agents, for example, carboxylic acid chlorides having a functionality of three or more, such as trimesic acid trichloride, cyanuric acid trichloride, 3,3',4,4'-benzophenone-tetracarboxylic acid tetrachloride, 1,4,5,8-naphthalenetetracarboxylic acid tetrachloride or pyromellitic acid tetrachloride, in amounts of from 0.01 to 1.0 mol% (based on dicarboxylic acid dichlorides used), or phenols having a functionality of three or more, such as phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis[4,4-bis(4-hydroxy-phenyl)-cyclohexyl]-propane, 2,4-bis(4-hydroxyphenyl-isopropyl)-phenol, tetra-(4-hydroxyphenyl)-methane, 2,6-bis(2-hydroxy-5-methyl-benzyl)-4-methyl-phenol, 2-(4-hydroxyphenyl)-2-(2,4-dihydroxyphenyl)-propane, tetra-(4-[4-hydroxyphenyl-isopropyl]-phenoxy)-methane, or 1,4-bis[4,4'-dihydroxytriphenyl)-methyl]-benzene, in amounts of from 0.01 to 1.0 mol% (based on diphenols used). Phenolic branching agents can be pre-placed with the diphenols; acid chloride branching agents can be introduced together with the acid dichlorides.

The content of carbonate structured units in the thermoplastic aromatic polyester carbonates can vary as desired. The content of carbonate groups is preferably up to 100 mol%, in particular up to 80 mol%, particularly preferably up to 50 mol%, based on the molar sum of ester groups and carbonate groups. Both the esters and the carbonates contained in the aromatic polyester carbonates can be present in the polycondensation product in the form of blocks or distributed randomly.

The thermoplastic aromatic polycarbonates and polyester carbonates can be used on their own or in an arbitrary mixture.

The present invention has no special requirements on the reinforcing material composited with the thermoplastic material, as long as it meets the requirements of the industry and specific products in terms of rigidity, toughness, environmental protection, flame retardance, bonding strength to thermoplastic materials, and the like. The reinforcing material commonly used in the industry to composite with thermoplastic materials may be continuous carbon fiber, short carbon fiber, glass fiber, mineral fiber, aramid fiber, and the like.

The thermoplastic composite substrate of the present invention may be a thermoplastic composite sheet, preferably a carbon fiber reinforced thermoplastic composite sheet, particularly preferably a continuous carbon fiber reinforced thermoplastic composite sheet, more particularly preferably a continuous carbon fiber reinforced polycarbonate composite sheet.

The fiber (such as carbon fiber or glass fiber) reinforced thermoplastic composite sheet may be made by a process including lamination of unidirectional fiber reinforced thermoplastic plys The thermoplastic composite sheet may also contain only one one ply under special requirements. The carbon fiber reinforced thermoplastic composite sheet comprises 20-70 wt%, preferably 40-65 wt%, of carbon fiber, based on 100 wt% of the carbon fiber reinforced thermoplastic composite sheet.

The continuous carbon fiber reinforced polycarbonate composite is typically a symmetrical laminate with multiple layers of unidirectional plys, for example. The fiber orientation in each ply can be specially designed to meet specific mechanical requirements.

In addition to other processes commonly used in the industry to prepare thermoplastic composite sheets, the carbon fiber reinforced thermoplastic composite sheet may also be made by lamination and hot pressing of one or more layers of one or more of carbon fiber prepregs and/or polymer films, plastic films (e.g. PC, TPU, PA films) or foamed films. The carbon fiber prepregs comprise a polycarbonate or an alloy thereof as a matrix material (a volume content of 40% to 70%) and continuous carbon fiber (a volume content of 30% to 60%), such as woven cloth, nonwoven cloth, or unidirectional fiber etc., the volume content being based on 100% of the volume of the prepregs.

In the present invention, the thickness of the thermoplastic composite sheet is, for example, 0.4 to 3.0 mm, preferably 0.6 to 1.2 mm.

The thermoplastic composite sheet useful in the present invention includes, for example, CF FR1000, CF FR1001 supplied by Covestro Co., Ltd., and the like.

### Coating composition

The coating composition of the present invention comprises one or more polyisocyanates and one or more H-active polyfunctional compounds, wherein the H-active polyfunctional compounds are preferably one or more hydroxyl polyols. The coating composition may further comprise additives commonly used in coating products and in the industry.

The polyurethanes used according to the present invention are obtained by reacting polyisocyanates with H-active polyfunctional compounds, wherein the H-active polyfunctional compounds are preferably one or more hydroxyl polyols.

As used herein, the term "polyurethanes" is also understood to be polyurethane ureas within the scope of the present invention, wherein those compounds with NH-functionality are used as the H-active polyfunctional compounds optionally in admixture with polyols.

Suitable polyisocyanates are the aromatic, araliphatic, aliphatic or cycloaliphatic polyisocyanates having an NCO functionality of preferably ≥ 2 known to those skilled, which may also have iminooxadiazinedione, isocyanurate, uretdione, urethane, allophanate, biuret, urea, oxadiazinetrione, oxazolidinone, acylurea and/or carbodiimide structures. These may be used individually or in an arbitrary mixture with one another.

The polyisocyanates mentioned above are di- or triisocyanates having aliphatically, cycloaliphatically, araliphatically and/or aromatically bound isocyanate groups known to those skilled. It is irrelevant whether they are prepared by using phosgene or by phosgene-free methods. Examples of these di- or triisocyanates include 1,4-diisocyanatobutane, 1,5-diisocyanatopentane, 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,10-diisocyanatodecane, 1,3-and 1,4-diisocyanatocyclohexane, 1,3- and 1,4-bis-(isocyanatomethyl)-cyclohexane, 1-isocyanato-3,3,5-trimethyl-5-isocyanatomethyl cyclohexane (isophorone diisocyanate, IPDI), 4,4'-diisocyanatodicyclohexylmethane (Desmodur® W, Covestro AG, Leverkusen, DE), 4-isocyanatomethyl-1,8-octane diisocyanate (triisocyanatononane, TIN), ω,ω'-diisocyanato-1,3-dimethylcyclohexane (H₆XDI), 1-isocyanato-1-methyl-3-isocyanato-methylcyclohexane, 1-isocyanato-1-methyl-4-isocyanato-methyl cyclohexane, bis-(isocyanatomethyl)-norbornane, 1,5-naphthalene diisocyanate, 1,3- and 1,4-bis-(2-isocyanato-prop-2-yl) benzene (TMXDI), 2,4- and 2,6-diisocyanatotoluene (TDI), especially 2,4- and 2,6-isomers and technical mixtures of the two isomers, 2,4'- and 4,4'-diisocyanatodiphenylmethane (MDI), polymeric MDI (pMDI) 1,5-diisocyanatonaphthalene, 1,3-bis-(isocyanatomethyl) benzene (XDI), as well as any mixtures of these compounds.

Preferably, the polyisocyanates here have an average NCO functionality of 2.0 to 6.0, preferably from 2.2 to 5.8, more preferably from 2.2 to 5.5, and an isocyanate group content of 5.0 to 37.0 wt%, preferably 14.0 to 34.0 wt%, based on 100 wt% of the polyisocyanates. Preferably, they may be exclusively aliphatic and/or cycloaliphatic polyisocyanates. Particularly preferably, they may be based on hexamethylene diisocyanate, isophorone diisocyanate, isomeric bis-(4,4'-isocyanatocyclohexyl)-methanes and any mixtures thereof.

Among the modified polyisocyanates having a relatively high molecular weight, known prepolymers having terminal isocyanate groups and a molecular weight of 400 to 15000, preferably 600 to 12000 are more suitable for the present invention. These compounds are prepared in known manner by reacting excess quantities of simple polyisocyanates of the type exemplified above with organic compounds having at least two isocyanate-reactive groups, in particular organic polyhydroxyl compounds. Suitable organic polyhydroxyl compounds are simple polyols having a molecular weight of 82 to 599, preferably 62 to 200, such as ethylene glycol, trimethylolpropane, propane-1,2-diol or butane-1,4-diol or butane-2,3-diol, but in particular higher molecular weight polyether polyols and/or polyester polyols of known type having a molecular weights of 600 to 12000, preferably 800 to 4000 and at least 2, usually 2 to 8, but preferably 2 to 6 primary and/or secondary hydroxyl groups.

Compounds containing isocyanate-reactive groups, in particular hydroxyl groups, which are suitable to prepare NCO prepolymers, are, for example, those disclosed in US-A 4,218,543. In the preparation of NCO prepolymers, these compounds containing isocyanate-reactive groups are reacted with simple polyisocyanates of the type exemplified above under the condition of holding an NCO excess. The NCO prepolymers generally have an NCO content of 10 to 26 wt%, preferably 15 to 26 wt%, based on 100 wt% of the NCO prepolymers. The NCO contents mentioned in the present invention are measured according to DIN-EN ISO 11909.

Suitable as an H-active component are polyols with an average OH number of 5 to 600 mg KOH/g and an average functionality of 2 to 6, preferably polyols with an average OH number of 10 to 50 mg KOH/g. The average OH numbers of the present invention are measured according to DIN EN ISO 4629-2.

According to the present invention, suitable polyols include, for example, polyhydroxyl polyethers which are obtainable by alkoxylation of suitable starter molecules such as ethylene glycol, diethylene glycol, 1,4-dihydroxybutane, 1,6-dihydroxyhexane, dimethylolpropane, glycerol, pentaerythritol, sorbitol or sucrose. As a starter may also act ammonia or amines such as ethylenediamine, hexamethylenediamine, 2,4-diaminotoluene, aniline or amino alcohols, or phenols such as bisphenol-A. The alkoxylation is carried out using propylene oxide and/or ethylene oxide, in any order or as a mixture.

Likewise suitable are those polyhydroxyl polyethers of relatively high molecular weight in which high molecular weight polyadducts or polycondensates or polymers are present in finely dispersed, dissolved or grafted form. Modified polyhydroxyl compounds of this kind are obtainable in a manner known per se, for example, when polyaddition reactions (e.g. reactions between polyisocyanates and amino-functional compounds) or polycondensation reactions (for example between formaldehyde and phenols and/or amines) are allowed to proceed in situ in the compounds having hydroxyl groups. Alternatively, it is also possible to mix a finished aqueous polymer dispersion with a polyhydroxyl compound and then to remove water from the mixture.

Polyhydroxyl compounds modified by vinyl polymers, as obtained, for example, by polymerization of styrene and acrylonitrile in the presence of polyethers or polycarbonate polyols, are also suitable for the preparation of polyurethanes. When polyether polyols which have been modified according to DE-A 2 442 101, DE-A 2 844 922 and DE-A 2 646 141 by graft polymerization with vinyl phosphonates and optionally (meth)acrylonitrile, (meth)acrylamide or OH-functional (meth)acrylic esters are used, polymers of exceptional flame retardance are obtained.

Suitable polyols also include polyester polyols as obtainable in a manner known per se by reaction of low molecular weight alcohols with polybasic carboxylic acids such as adipic acid, phthalic acid, hexahydrophthalic acid, tetrahydrophthalic acid or the anhydrides of these acids. A preferred polyol having ester groups is castor oil. Also additionally suitable are formulations comprising castor oil, as obtainable by dissolution of resins, for example of aldehyde-ketone resins, and modifications of castor oil and polyols based on other natural oils.

Representatives of the compounds to be used as H-active compounds mentioned are described, for example, in High Polymers, Vol. XVI, "Polyurethanes Chemistry and Technology", Saunders-Frisch (ed.) Interscience Publishers, New York, London, vol. 1, p. 32-42, 44, 54 and vol. II, 1984, p. 5-6 and p. 198-199. It is also possible to use mixtures of the compounds enumerated.

In principle, the person skilled in the art is aware of the ways of influencing the physical polymer properties of the polyurethane, such that NCO component, aliphatic diol and polyol can be matched to one another in a favorable manner.

Generally in polyurethane chemistry, it may be considered to use aliphatic diols having an average OH number of >500 mg KOH/g as the chain extenders, such as ethylene glycol, diethylene glycol, propylene glycol, dipropylene glycol, butane-1,4-diol, propane-1,3-diol. Preference is given to diols such as 2-butane-1,4-diol, butane-1,3-diol, butane-2,3-diol and/or 2-methylpropane-1,3-diol. It will be appreciated that it is also possible to use the aliphatic diols in an arbitrary mixture with one another.

The coating composition used in the present invention is preferably an aqueous UV-curable polyurethane coating composition, a two-component aqueous polyurethane coating composition, a one-component aqueous polyurethane coating composition for high-temperature baking varnish, and the like.

The aqueous UV-curable polyurethane coating composition comprises an aqueous polyurethane dispersion having double bonds and optional additives. The aqueous UV-curable polyurethane coating composition can generally be prepared by reacting a hydroxy-functional polyester having double bonds with an epoxy acrylate, followed by polymerization with a diisocyanate and a diol, and finally a hydrophilic modification. Examples are the series resins of Bayhydrol UV supplied by Covestro Co., Ltd.

The two-component aqueous polyurethane coating composition generally comprises aqueous polyacrylate polyols, hydrophilically modified polyisocyanates, and optional additives.

The aqueous polyacrylate polyols include copolymers of acrylates and/or methacrylates (ethyl acrylate, butyl acrylate and methyl methacrylate) which contain hydroxyl groups. The desired hydroxyl groups for reaction with the isocyanate groups are often introduced directly via functionalized acrylates or methacrylates, for example via hydroxyethyl acrylate, hydroxyethyl methacrylate or hydroxypropyl methacrylate. They may also be introduced by means of a polymer-analog reaction on the polyacrylates produced. The industrial preparation of the polyacrylate polyols is mainly carried out via radical polymerization of monomers in an organic solvent or in bulk by means of thermal initiation. The aqueous polyacrylate polyols can be used to obtain, via emulsion polymerization or suspension polymerization in water, a primary dispersion which is then dispersed in water to form a secondary dispersion, or can be firstly polymerized in a solvent and then dispersed in water to form a secondary dispersion. The initiators used for radical polymerization and suspension polymerization in solution or in bulk are mainly azo compounds such as azobisisobutyronitrile, or peroxides such as ethyl butylperoxy-2-hexanoate. The emulsion polymerization mainly uses water-soluble initiators such as ammonium persulfate. The aqueous polyacrylate polyols may be, for example, the series products of Bayhydrol A supplied by Covestro Co., Ltd.

The hydrophilically modified polyisocyanates may be a mixture of polyisocyanates containing a nonionic emulsifier of polyether urethane type, as shown in formula (4), which may usually be produced by reacting an aliphatic or cycloaliphatic isocyanate trimer, such as HDI or IPDI trimer, with an insufficient amount of monofunctional polyethylene oxide polyether alcohol.

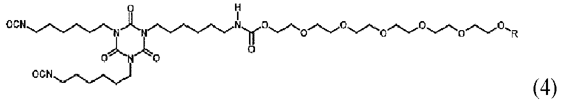

The hydrophilically modified polyisocyanates may also be a hydrophilically modified polyisocyanate containing a polyether allophanate emulsifier, as shown in formula (5), which may usually be produced by allophanatization of a mixture of polyisocyanates containing a nonionic emulsifier of polyether urethane type to connect each hydrophilic polyether chain with two polyisocyanate molecules.

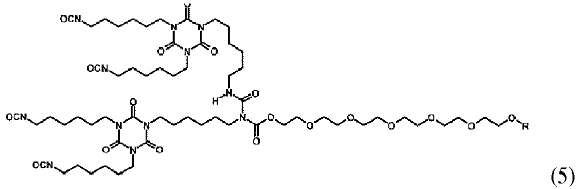

The hydrophilically modified polyisocyanates may also be a ionically hydrophilically modified polyisocyanate of sulfonate type, as shown in formula (6), which may usually be produced by reacting an aliphatic isocyanate with 3-(cyclohexylamino)-1-propane sulphonic acid under mild conditions in the presence of a tertiary amine neutralizing agent.

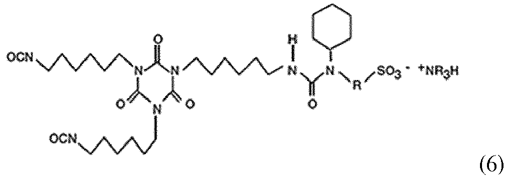

The hydrophilically modified polyisocyanates may be, for example, the series products of Bayhydur supplied by Covestro Co., Ltd.

The one-component aqueous polyurethane coating composition for high-temperature baking varnish comprises the aqueous polyacrylate polyols, hydrophilically modified blocked polyisocyanates, and optional additives.

The hydrophilically modified blocked polyisocyanates are the stable adducts generated by reacting the NCO groups of the hydrophilically modified polyisocyanates with blocking agents. The common blocking agents are butanone oxime, dimethylpyrazole, malonate, diisopropylamine, ε-caprolactam, methyl cyclopentanone-2-carboxylate, isononylphenol, and mixtures thereof. The hydrophilically modified blocked polyisocyanates are mixed with the aqueous polyacrylate polyols to obtain a stable mixture at room temperature. During the high temperature curing of the coating composition, the blocking agents in the hydrophilically modified blocked polyisocyanates dissociate to release the NCO groups which then crosslinks with the aqueous polyacrylate polyol component.

The hydrophilically modified blocked polyisocyanates may be, for example, the series products of Bayhydur BL supplied by Covestro Co., Ltd.

The optional additives includes those conventionally known in the coating industry, such as one or more of the following: inorganic or organic pigments, organic light stabilizers, radical blocking agents, dispersants, flowable agents, thickeners, defoamers, adhesives, bactericides, stabilizers, inhibitors, catalysts, and the like. The additives may also include at least another cross-linker and/or chain extender selected from the group consisting of amines and amino alcohols such as ethanolamine, diethanolamine, diisopropanolamine, ethylenediamine, triethanolamine, isophoronediamine, N,N'-dimethyl(diethyl)-ethylenediamine, 2-amino-2-methyl (or ethyl)-1-propanol, 2-amino-1-butanol, 3-amino-1,2-propanediol, 2-amino-2-methyl(ethyl)-1,3-propanediol, and alcohols such as ethylene glycol, diethylene glycol 1,4-dihydroxybutane, 1,6-dihydroxyhexane, dimethylolpropane, glycerol and pentaerythritol, as well as sorbitol and sucrose, or a mixture of two or more thereof.

The thickness of the coating composition applied to the thermoplastic composite substrate can be dependent on the product requirements of the thermoplastic composite article. Typical thickness ranges from 40 um to 150 um, preferably 80-120 um.

In case of a UV-curable coating composition, the UV-curing conditions of the coating composition on the thermoplastic composite substrate are dependent on the coating composition used, for example >300 mJ/cm², preferably >400 mJ/cm².

### Method of preparing a thermoplastic composite article

According to the present invention, the method of preparing a thermoplastic composite article comprises the steps of:
a) coating a coating composition on one surface of a thermoplastic composite substrate; and
b) allowing the substrate coated with the coating composition to be thermoformedin a forming mold to obtain the thermoplastic composite article.

The "coating a coating composition" may be applying the coating composition to an entire surface of the thermoplastic composite substrate or only to one or more portions of a surface of the substrate. The coating can be brush coating, dip coating, spray coating, roll coating, blade coating, flow coating, pouring, printing or transfer printing, preferably brush coating, dip coating or spray coating.

Preferably, the coating composition is an aqueous UV-curable polyurethane coating composition, and the thermoplastic composite substrate used is a continuous carbon fiber reinforced thermoplastic composite sheet (i.e. a CFRTP sheet). Preferably, the aqueous UV-curable polyurethane coating composition is wet-coated on one surface of the CFRTP sheet by a wire rod.

Prior to performing step b), the thermoplastic composite substrate coated with the coating composition is preferably preheated in a preheating device such as an infrared (IR) device. For example, when the preheating temperature reaches a temperature 30°C-110°C, preferably 50°C-90 °C higher than the glass transition temperature Tg of the thermoplastic material in the thermoplastic composite substrate, the thermoplastic composite substrate is transferred to the forming mold by, for example, a robot arm or the like and thermoformed.

The method of preparing a thermoplastic composite article may further comprise step c): applying a structural thermoplastic material to the other surface of the thermoplastic composite substrate, the structural thermoplastic material being used to form a structured component.

The structural thermoplastic material used may be short fiber reinforced thermoplastics. The matrix material in the short fiber reinforced thermoplastics is not particularly limited, and preferably selected from one or more thermoplastic polymers of polycarbonates (PC), acrylonitrile-butadienestyrene copolymer (ABS), polymethyl methacrylate (PMMA) and the like, particularly preferably aromatic polycarbonates. The thermoplastic polymers may have a number-average molecular weight (Mn) of 5,000 to 1,000,000 g/mol, preferably 10,000 to 300,000 g/mol, more preferably 20,000 to 100,000 g/mol, as measured by a GPC (gel permeation chromatography) method. The measurement standards vary depending on the thermoplastics, wherein it is determined using a polycarbonate standard in case of the polycarbonates.

The short fiber in the short fiber reinforced thermoplastic material may be, but is not limited to, for example, synthetic fiber (such as polyester fiber), carbon fiber, or glass fiber, preferably glass fiber, more preferably glass fiber having an average length of 0.2 to 10 mm, particularly preferably 1 to 8 mm, most preferably 2 to 6 mm.

The short fiber reinforced thermoplastic material used to form a structured component may generally be in particulate form, and produced by a process including the steps of mixing the short fiber and the thermoplastic resin in the desired proportion and then blending (e.g. granulating) the mixture in a manner well known in the polymer field. The products available include, for example, 50 wt% glass fiber (based on 100 wt% of the total weight of the polycarbonate product) reinforced polycarbonate product Makrolon® GF9020 supplied by Covestro (Germany) Co., Ltd.

The structured component may be, for example, a rib, a boss, a stud, a stiffener, a hook, and the like.

Step c) may be only addition of the structural thermoplastic material to a given position on the other surface, for example, manual or mechanical addition, and then forming in the forming mold of step b), or it may be injection molding of the structural thermoplastic material at a given position of the other surface, for example, injection molding in a mold of a molded structured component or molding by 3D printing, or it may also be injection molding of the structural thermoplastic material within the mold cavity reserved from the forming mold of step b), or it may also be injection molding of the structural thermoplastic material on the other surface after step b) is completed.

If the thermoplastic composite article comprises a plurality of structured components, the different structured components may use the same or different structural thermoplastic materials as desired.

If the structural thermoplastic material is subject to an injection molding process, the process can be a process well known in the art and the process conditions can be determined based on the structural thermoplastic material used. For example, In case where polycarbonate reinforced by a large amount of glass fiber is used as the structural thermoplastic material, the injection molding process conditions may be: a temperature of 240-310°C, a mold temperature of 70-110°C (if any), an injection pressure of 85-240 MPa, and a back pressure of 0.3-1.4 MPa.

According to the present invention, it is not necessary to perform a special surface treatment of the other surface of the thermoplastic composite substrate when the structural thermoplastic material is applied to the other surface, since the matrix material of the thermoplastic composite substrate belongs to thermoplastic materials. The step c) may be performed before, during or after step b), depending on the factors such as different manners in which the structural thermoplastic material is applied in step c), different structures and surface decoration requirements of the thermoplastic composite article product, and the like.

The method of preparing a thermoplastic composite article may further comprise step d): completely or partially curing the coated coating composition prior to step b). In case where the coating composition used is an aqueous UV-curable polyurethane coating composition, the complete curing refers to complete curing prior to step b), and the partial curing refers to partial curing of the coating composition prior to step b) and then complete UV-curing after step b). In the case where the coating composition used is an aqueous heat-curable polyurethane coating composition (e.g. a two-component aqueous polyurethane coating composition or a one-component aqueous polyurethane coating composition for high-temperature baking varnish), the complete curing refers to complete heat-curing, and the partial curing refers to partial heat-curing prior to step b) and then complete heat-curing in step b).

The step d) may be performed between step a) and step b). In case where the coating composition used is an aqueous heat-curable polyurethane coating composition, the method of preparing a thermoplastic composite article may not include the step d), and the curing is completed directly in step b). To facilitate the implementation of step c), step d) may be carried out, and accordingly, step c) is preferably performed after step d).

The forming mold is designed according to the product requirements of the thermoplastic composite article. One or more textures and/or one or more patterns may be introduced to the mold cavity side that is in contact with the coating composition. This can be achieved by chemical etching or laser etching or the like on the corresponding cavity side of the forming mold. The texture and/or pattern introduced may be a plain weave pattern, a fine texture, or a high gloss area, among others. Depending on the design of the forming mold, two or more textures and/or patterns can be simultaneously obtained on the surface of a thermoplastic composite article. The coating formed by the coating composition can accurately replicate the texture and/or pattern during thermoforming process.

A portion of the cavity side of the forming mold in contact with the coating composition may be polished to achieve a high gloss design, and another portion may be irradiated by laser to achieve a matte texture design, so that after the thermoforming step, a portion of one surface of the thermoplastic composite article prepared achieves a high gloss effect and another portion achieves a matte effect.

The forming mold may be a mold that is rapidly heated and/or rapidly cooled. The mold temperature of the forming mold in an appropriate working state can be determined according to the factors such as the thermoplastic composite substrate, the coating composition, and the structural thermoplastic material used. In order to adapt to a wider range of applications, the working mold temperature of the forming mold may reach, for example, 400°C. Preferably, the forming mold can achieve a uniform temperature distribution during heating and cooling. In case where an aromatic polycarbonate is used as the matrix material of the thermoplastic composite material and/or the structural thermoplastic material, the mold temperature in the thermoforming process may be, for example, 160 to 230°C, and the thermoforming pressure may be 5 to 20 MPa, preferably 10 to 15 MPa.

In case where the coating composition used is a one-component aqueous polyurethane coating composition for high-temperature baking varnish, the one-component aqueous polyurethane coating composition for high-temperature baking varnish is preferably applied by a wet coating method. After the one-component aqueous polyurethane coating composition for high-temperature baking varnish is coated, it may be cured at 100°C to 200°C, preferably 110°C to 180°C, and most preferably 130°C to 160°C, for example at about 140°C for 15 to 30 minutes, preferably 20 to 30 minutes, wherein the one-component aqueous polyurethane coating composition for high-temperature baking varnish is not completely cured, and then the structural thermoplastic material is injection molded on the other surface of the thermoplastic composite substrate. In the thermoforming step, the one-component aqueous polyurethane coating composition for high-temperature baking varnish is completely cured.

The thermoplastic composite article and the preparation method thereof provided according to the present invention can, when compared with the prior art, reduce the production steps such as overmolding and multiple spray painting, and simplify the production process, thereby effectively improving the production efficiency and yield rate, in addition it is also environmentally friendly. The coating formed by the coating composition is stretchable or its shrinkage is negligible compared to that of the thermoplastic composite substrate, thus also greatly reducing the warpage risk of the thermoplastic composite article.

Although the present invention has been described in detail for the purpose of the present invention, it is to be understood that this detailed description is merely illustrative. In addition to the contents that can be defined by the claims, those skilled in the art can make various changes without departing from the spirit and scope of the present invention.

## Claims

1. A method of preparing a thermoplastic composite article, comprising the steps of:
a) coating a coating composition on one surface of a thermoplastic composite substrate; and
b) allowing the substrate coated with the coating composition to be thermoformed in a forming mold to obtain the thermoplastic composite article.

2. The method of claim 1, wherein the thermoplastic composite substrate includes a carbon fiber reinforced polycarbonate composite.

3. The method of claim 1 or 2, wherein the thermoplastic composite substrate includes a carbon fiber reinforced polycarbonate composite sheet.

4. The method of claim 3, wherein the carbon fiber is continuous carbon fiber.

5. The method of claim 3, wherein the carbon fiber reinforced polycarbonate composite sheet comprises one layer of unidirectional ply or more layers of laminated unidirectional plies.

6. The method of claim 1, wherein the thermoplastic composite substrate includes a sheet produced by lamination and hot pressing of one or more of one or more layers of carbon fiber prepregs and/or polymer films, plastic films, foamed films.

7. The method of claim 1, wherein the coating composition comprises one or more polyisocyanates and one or more H-active polyfunctional compounds, wherein the H-active polyfunctional compounds are preferably one or more polyols.

8. The method of claim 7, wherein the coating composition is selected from one or more of an aqueous UV-curable polyurethane coating composition, a two-component aqueous polyurethane coating composition, and a one-component aqueous polyurethane coating composition for high-temperature baking varnish.

9. The method of claim 1 or 2, wherein the inner surface of the forming mold in contact with the coating composition comprises one or more textures or patterns.

10. The method of claim 1 or 2, wherein it further comprises step c): applying a structural thermoplastic material to the other surface of the thermoplastic composite substrate, the structural thermoplastic material being used to form a structured component.

11. The method of claim 10, wherein the structured component includes one or more of a rib, a boss, a stud, a stiffener, a hook.

12. The method of claim 10 or 11, wherein the structured component is injection molded in a mold for forming the structured component or molded by 3D-printing prior to step b), or injection molded in a predetermined mold cavity of the forming mold in step b), or injection molded by after step b).

13. The method of claims 1 or 10, wherein it further comprises step d): completely or partially curing the coated coating composition prior to step b).

14. A thermoplastic composite article prepared by a method according to any one of claims 1-13.

15. Use of a thermoplastic composite article prepared by a method according to any one of claims 1-13 in electronic products, box bodies, vehicles, conveyances.

16. An electronic product comprising a shell body comprising a thermoplastic composite article prepared by a method according to any one of claims 1-13.

17. The electronic product of claim 16, wherein it includes one or more of a mobile communication device, a notebook computer, a tablet computer.

18. A box body comprising a thermoplastic composite article prepared by a method according to any one of claims 1-13.

19. A vehicle comprising a panel comprising a thermoplastic composite article prepared by a method according to any one of claims 1-13.
